# EUROPEAN PATENT APPLICATION

(11) **EP 4 683 046 A1**
(43) Date of publication of application: **21.01.2026**
(21) Application number: 23932813.1
(22) Date of filing: 01.12.2023
(51) Int. Cl.: H01M 10/633, H01M 10/613

(54) **TEMPERATURE CONTROL DEVICE, CONTROL METHOD FOR TEMPERATURE CONTROL DEVICE, AND COMPUTER STORAGE MEDIUM**

(30) Priority: 11.04.2023 CN 202310385420
(71) Applicant: Chongqing Midea General Refrigeration Equipment Co., Ltd., Chongqing 401336 (CN); Hefei Midea Heating & Ventilating Equipment Co., Ltd., Hefei, Anhui 230088 (CN); Midea Group Co., Ltd., Foshan, Guangdong 528311 (CN)
(72) Inventor: WEI, Pengyun, Chongqing 401336 (CN); LUO, Mingbo, Chongqing 401336 (CN); LUO, Mingwen, Chongqing 401336 (CN)
(74) Representative: RGTH
(86) International application number: PCT/CN2023/135884
(87) International publication number: WO 2024/212542

(57) **Abstract**

The present disclosure provides a temperature control device and a control method for the temperature control device and a computer storage medium. The control method includes: determining that a first predetermined condition is satisfied, controlling a main refrigerant path to be in communication with a second refrigerant branch, to enable a heat accumulator to store energy; obtaining an outlet water temperature of a main heat transfer path; and based on the outlet water temperature being less than a first set value and determining that a second predetermined condition is satisfied, controlling the main heat transfer path to be in communication with a second heat transfer branch, to enable the heat accumulator to release heat. According to the control method of the present disclosure, a refrigerant system is controlled to operate, and the main refrigerant path is controlled to be in communication with the second refrigerant branch, to store heat in the heat accumulator. When a battery pack has a heating demand, that is, when the outlet water temperature of the main heat transfer path is less than a first determined temperature, the main heat transfer path is controlled to be in communication with the second heat transfer branch. This allows the heat stored in the heat accumulator to be transferred to the battery pack through the second heat transfer branch and the main heat transfer path, to compensate for insufficient heating at an initial start-up stage of a compressor and meet the heating demand of the battery pack.

## Description

### CROSS-REFERENCE TO RELATED APPLICATION

This application claims priority to Chinese patent application No. 202310385420.5, titled "TEMPERATURE CONTROL DEVICE, CONTROL METHOD FOR TEMPERATURE CONTROL DEVICE, AND COMPUTER STORAGE MEDIUM" and filed with China National Intellectual Property Administration on April 11, 2023, the entire contents of which are incorporated herein by reference.

### FIELD

The present disclosure relates to the field of refrigeration device technologies, and more particularly, to a temperature control device, a control method for the temperature control device, and a computer storage medium.

### BACKGROUND

With the support of policies, an energy storage industry has developed vigorously, and a battery energy storage industry has also ushered in explosive growth. Battery temperatures need to be controlled during normal use of batteries. High-density battery packs with high ambient temperature requirements impose higher demands on stability and reliability of heat dissipation, while also imposing strict requirements on refrigeration energy consumption.

Generally, a solution for temperature control of a battery pack involves an air-cooled chilled water air conditioner combined with an electric heating system. The air-cooled chilled water air conditioner is used to cool the battery pack, meeting a cooling demand of the battery pack during operation. When the battery pack starts in a low-temperature environment, the electric heating system is used to transport heat to the battery pack, ensuring the normal startup of the battery. However, the electric heating system exhibits low energy efficiency, slow heat output during startup, and nonlinear regulation, resulting in poor stability of an output temperature.

In the related devices, a four-way reversing valve is disposed in a refrigerant circulation pipeline of the air-cooled chilled water air conditioner, and a condenser in a heat pump system of the air-cooled chilled water air conditioner is used to directly transport heat to the battery pack through a chilled water pipeline. However, due to inherent characteristics of a compressor of a commonly used air-cooled chilled water air conditioner, the compressor has a transition time from startup to stable output, resulting in a problem of discontinuous heat output of the air-cooled chilled water air conditioner. As a result, a heat demand of the battery pack during a start-stop process cannot be met.

### SUMMARY

An objective of the present disclosure is to at least solve a problem of discontinuous heat output in an air-cooled chilled water air conditioner due to the transition time of a compressor from startup to stable output. This objective is achieved through the following technical solutions.

In a first aspect of the present disclosure, a control method for a temperature control device is provided. The temperature control device comprises a refrigerant system, a heat transfer system, and a heat accumulator. The refrigerant system comprises a main refrigerant path, a first heat exchanger, and a first refrigerant branch and a second refrigerant branch connected in parallel to the main refrigerant path. The heat transfer system comprises a main heat transfer path, and a first heat transfer branch and a second heat transfer branch connected in parallel to the main heat transfer path. The first heat transfer branch is thermally connected to the first refrigerant branch through the first heat exchanger, and the second heat transfer branch is thermally connected to the second refrigerant branch through the heat accumulator. The control method comprises: determining that a first predetermined condition is satisfied, controlling the main refrigerant path to be in communication with the second refrigerant branch, to enable the heat accumulator to store energy; obtaining an outlet water temperature of the main heat transfer path; and based on the outlet water temperature being less than a first set value and determining that a second predetermined condition is satisfied, controlling the main heat transfer path to be in communication with the second heat transfer branch, to enable the heat accumulator to release heat.

According to the control method for the temperature control device of the present disclosure, before a battery pack has a heating demand, for example, when the battery pack stops operating or when the battery has a cooling demand, the refrigerant system is controlled to operate and the main refrigerant path is controlled to be in communication with the second refrigerant branch, to store the heat in the heat accumulator. When the battery pack has the heating demand, that is, when the outlet water temperature of the main heat transfer path is less than a first determined temperature, the main heat transfer path is controlled to be in communication with the second heat transfer branch. This allows the heat stored in the heat accumulator to be transported to the battery pack through the second heat transfer branch and the main heat transfer path, to compensate for insufficient heating at an initial start-up stage of the compressor and meet the heating demand of the battery pack.

In addition, the control method according to the present disclosure may also have the following additional technical features.

In some embodiments of the present disclosure, said determining that the second predetermined condition is satisfied comprises at least one of the following: obtaining an ambient temperature and determining that the ambient temperature is less than or equal to a second set value; and obtaining a start time of the refrigerant system and determining that the start time is less than a set time value.

In some embodiments of the present disclosure, the control method further comprises: based on the ambient temperature being less than or equal to the second set value and the outlet water temperature being less than the first set value, controlling the main refrigerant path to be in communication with the first refrigerant branch, controlling the main heat transfer path to be in communication with the first heat transfer branch, and controlling the main refrigerant path to be disconnected from the second refrigerant branch.

In some embodiments of the present disclosure, said determining that the first predetermined condition is satisfied comprises: obtaining the ambient temperature and determining that the ambient temperature is greater than the second set value.

In some embodiments of the present disclosure, the control method further comprises: based on the outlet water temperature being less than the first set value and the ambient temperature being greater than the second set value, controlling the main refrigerant path to be in communication with the first refrigerant branch, controlling the main heat transfer path to be in communication with the first heat transfer branch, and controlling the main heat transfer path to be disconnected from the second heat transfer branch.

In some embodiments of the present disclosure, the control method further comprises: obtaining information of electricity price; setting the second set value to a first temperature based on the electricity price being in a valley period; and setting the second set value to a second temperature based on the electricity price being in a peak period. The second temperature is greater than the first temperature.

In some embodiments of the present disclosure, said determining that the first predetermined condition is satisfied comprises at least one of the following: obtaining information of electricity price, and determining that the electricity price is in a valley period and the heat transfer system is shut down; and obtaining an ambient temperature, and determining that the ambient temperature is greater than a second set value and the heat transfer system is shut down.

According to the technical solutions of a second aspect of the present disclosure, a temperature control device is further provided. The temperature control device comprises: a refrigerant system comprising a refrigerant circulation pipeline and a first heat exchanger, the refrigerant circulation pipeline comprising a main refrigerant path, and a first refrigerant branch and a second refrigerant branch connected in parallel to the main refrigerant path; a heat transfer system comprising a heat transfer circulation pipeline, the heat transfer circulation pipeline comprising a main heat transfer path, and a first heat transfer branch and a second heat transfer branch connected in parallel to the main heat transfer path; a heat accumulator; a first temperature sensor disposed at an outlet end of the main heat transfer path and configured to detect an outlet water temperature of the main heat transfer path; and a control device electrically connected to the refrigerant system, the heat transfer system, and the first temperature sensor. The first heat transfer branch is thermally connected to the first refrigerant branch through the first heat exchanger, and the second heat transfer branch is thermally connected to the second refrigerant branch through the heat accumulator. The control device is configured to control on-off of the second refrigerant branch and the second heat transfer branch based on the outlet water temperature, a first predetermined condition, and a second predetermined condition.

In some embodiments of the present disclosure, the temperature control device further comprises a second temperature sensor electrically connected to the control device and configured to detect an ambient temperature. The control device is further configured to obtain information of electricity price, and control on-off of the first refrigerant branch, the second refrigerant branch, the first heat transfer branch, and the second heat transfer branch based on the information of electricity price, the outlet water temperature, and the ambient temperature.

In some embodiments of the present disclosure, the temperature control device further comprises: a first valve assembly disposed at the refrigerant circulation pipeline and configured to control refrigerant flow rates of the first refrigerant branch and the second refrigerant branch; and a second valve assembly disposed at the heat transfer circulation pipeline and configured to control refrigerant flow rates of the first heat transfer branch and the second heat transfer branch. The control device is electrically connected to the first temperature sensor, the second temperature sensor, the first valve assembly, and the second valve assembly.

In some embodiments of the present disclosure, the refrigerant system further comprises: a four-way reversing valve; and a compressor in communication with the main refrigerant path through the four-way reversing valve. The control device is electrically connected to the four-way reversing valve and the compressor, and is configured to control operation of the four-way reversing valve and the compressor based on the outlet water temperature, the first predetermined condition, and the second predetermined condition.

According to a third aspect of the present disclosure, a computer storage medium is further provided. The computer storage medium has a computer-readable instruction stored thereon. The computer-readable instruction, when read by one or more processors, causes the one or more processors to execute the control method according to any one of the technical solutions of the first aspect.

### BRIEF DESCRIPTION OF THE DRAWINGS

Various other advantages and benefits will become apparent to those skilled in the art through reading the detailed description of preferred embodiments below. The accompanying drawings are merely used for the purpose of illustrating the preferred embodiments, and should not be construed as limitation on the present disclosure. Moreover, the same components are indicated by the same reference numerals throughout the accompanying drawings.
FIG. 1 is a schematic flowchart of a control method for a temperature control device according to some embodiments of the present disclosure.
FIG. 2 is a schematic flowchart of a control method for a temperature control device according to some embodiments of the present disclosure.
FIG. 3 is a schematic flowchart of a control method for a temperature control device according to some embodiments of the present disclosure.
FIG. 4 is a schematic flowchart of a control method for a temperature control device according to some embodiments of the present disclosure.
FIG. 5 is a schematic flowchart of a control method for a temperature control device according to some embodiments of the present disclosure.
FIG. 6 is a schematic flowchart of a control method for a temperature control device according to some embodiments of the present disclosure.
FIG. 7 is a schematic flowchart of a control method for a temperature control device according to some embodiments of the present disclosure.
FIG. 8 is a schematic flowchart of a control method for a temperature control device according to some embodiments of the present disclosure.
FIG. 9 is a schematic structural diagram of a temperature control device according to some embodiments of the present disclosure.
FIG. 10 is a schematic structural diagram of a temperature control device according to some embodiments of the present disclosure.

Reference numerals of the accompanying drawings are as follows:
100, temperature control device;
10, refrigerant circulation pipeline; 11, main refrigerant path; 12, first refrigerant branch; 13, second refrigerant branch; 121, first electronic expansion valve; 131, second electronic expansion valve;
20, heat transfer circulation pipeline; 21, main heat transfer path; 22, first heat transfer branch; 23, second heat transfer branch; 24, three-way valve; 25, circulation water pump; 26, filter;
30, first heat exchanger; 40, second heat exchanger; 50, heat accumulator
101, first temperature sensor; 102, second temperature sensor;
80, control device; 60, fan unit; 70, compressor; 90, four-way reversing valve.

### DETAILED DESCRIPTION OF THE EMBODIMENTS

Exemplary embodiments of the present disclosure will be described in detail below with reference to the drawings. Although the exemplary embodiments of the present disclosure are illustrated in the drawings, it should be understood that the present disclosure may be embodied in various forms and should not be construed as limited to the embodiments described herein. Instead, these embodiments are provided for a thorough understanding of the present disclosure, and can fully convey the scope of the present disclosure to those skilled in the art.

It should be understood that terms used herein are intended to describe particular exemplary embodiments only and are not intended to be limited thereto. Unless the context clearly indicates, otherwise singular forms of "a", "one" and "said" as used herein can also be interpreted as comprising plural forms. Terms "comprise", "contain" and "have" are inclusive and therefore specify the presence of stated features, elements, and/or components, but do not preclude the presence or an addition of one or more other features, elements, components, and/or a combination thereof. The method steps, processes, and operations described herein are not to be construed as necessitating that they be performed in a particular order described or illustrated, unless the order of performance is clearly indicated. It should also be understood that additional or alternative steps may be used.

Although terms "first", "second", "third", etc. may be used herein to describe multiple elements, components, regions, layers and/or sections, these elements, components, regions, layers and/or sections should not be limited by these terms. These terms may only be used to distinguish one element, component, region, layer or section from another region, layer or section. The terms such as "first", "second" or the like do not imply a sequence or an order when used herein, unless specified otherwise. Therefore, a first element, component, region, layer or section discussed below may be represented as a second element, component, region, layer or section, without departing from the teachings of exemplary implementations.

For ease of description, spatially relative terms, such as "internal," "external," "inside," "outside," "beneath," "below," "on," and "below," may be used herein to describe a relation of one element or feature illustrated in the figures to another element or feature illustrated in the figures. These spatially relative terms are intended to comprise different orientations of devices in use or operation other than those depicted in the figures. For example, if a device in the figure is flipped over, an element described as "under other elements or features" or "below other elements or features" will then be oriented as "on other elements or features" or "above other elements or features". Thus, the example term "below ..." may comprise orientations of above and below. The device may be oriented differently (e.g., rotated 90 degrees or in other directions), and may be interpreted in accordance with spatially relative descriptors used herein.

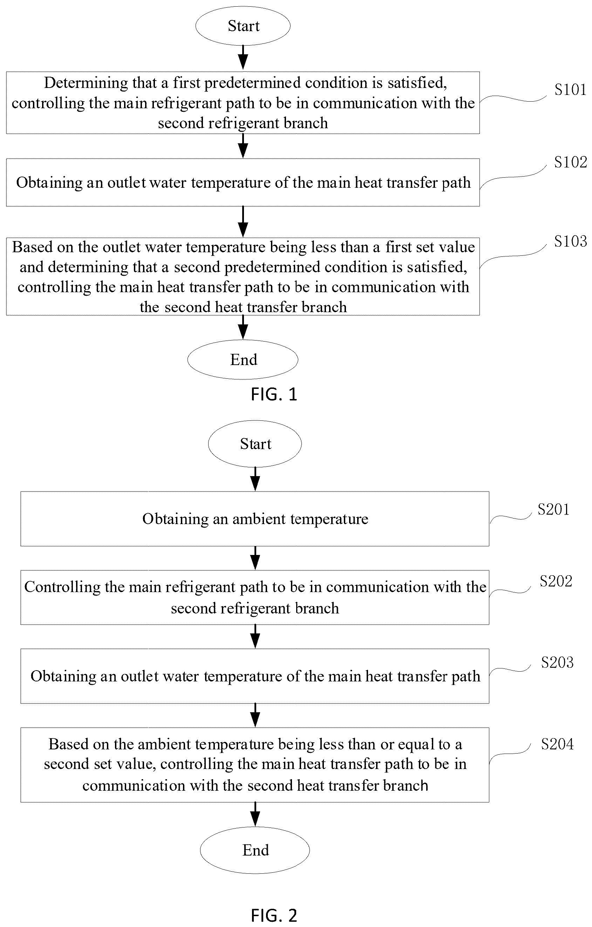

As illustrated in FIG. 1, according to an embodiment of the present disclosure, a control method for a temperature control device is provided.

The temperature control device comprises a refrigerant system, a heat transfer system, and a heat accumulator. The refrigerant system is configured to generate heat in a first heat exchanger and output the heat to the heat transfer system. It should be understood that the heat transfer system is essentially an intermediate medium for the refrigerant system to transfer heat or cold. The heat transfer system is configured to transport the heat or the cold generated by the refrigerant system to a battery pack, a data center, etc., to perform temperature control on the battery pack, the data center, etc. The refrigerant system has a refrigerant circulation pipeline comprising a main refrigerant path, a first refrigerant branch and a second refrigerant branch. The first refrigerant branch and the second refrigerant branch are connected in parallel to the main refrigerant path, to allow the main refrigerant path to form separate refrigerant flow circulation with the first refrigerant branch and the second refrigerant branch, respectively. The heat transfer system has a heat transfer circulation pipeline comprising a main heat transfer path, a first heat transfer branch, and a second heat transfer branch. The first heat transfer branch and the second heat transfer branch are connected in parallel to the main heat transfer path, to allow the main heat transfer path to form separate coolant flow circulation with the first heat transfer branch and the second heat transfer branch, respectively. The first heat exchanger in the refrigerant system may be used as a condenser or an evaporator. When the refrigerant system supplies heat to the battery pack or the data center, the first heat exchanger functions as the condenser. The first heat exchanger is in communication with the first heat transfer branch and the first refrigerant branch, respectively. During a heat supply process, a gaseous refrigerant in the first refrigerant branch is changed from gas to liquid in the first heat exchanger and releases the heat. In this way, a temperature of a coolant in a first main heat transfer path is increased, allowing the first heat transfer branch to obtain heat. Heat storage material is filled inside the heat accumulator, and the heat storage material may be a phase change material to increase a heat storage density of the heat accumulator. The heat accumulator is in communication with the second heat transfer branch and the second refrigerant branch, respectively. A gaseous refrigerant in the second refrigerant branch is changed from gas to liquid in the heat accumulator and releases the heat. In this way, a temperature inside the heat accumulator is increased, or the heat storage material undergoes a phase change to allow the heat accumulator to store heat. When the main heat transfer path is in communication with the second heat transfer branch, the heat in the heat accumulator may be output outward through the second heat transfer branch and the main heat transfer path.

As illustrated in FIG. 1, the control method comprises the following operations.

At block S101, when determining that a first predetermined condition is satisfied, the main refrigerant path is controlled to be in communication with the second refrigerant branch.

At block S102, an outlet water temperature of the main heat transfer path is obtained.

At block S103, based on the outlet water temperature being less than a first set value and determining that a second predetermined condition is satisfied, the main heat transfer path is controlled to be in communication with the second heat transfer branch.

At block S101, the main refrigerant path is in communication with the second refrigerant branch, and the gaseous refrigerant in the second refrigerant branch is changed from the gas to the liquid in the heat accumulator and releases the heat. In this way, a temperature of the heat storage material is increased, or the heat storage material undergoes the phase change to allow the heat accumulator to store the heat. It should be understood that, when the first predetermined condition is satisfied, it is indicated that the temperature control device has conditions for heat storage operation. For example, during operation of the temperature control device, when the first predetermined condition is satisfied, all or part of the heat generated by operation of the refrigerant system is stored in the heat accumulator, and no adverse impact will be imposed on the temperature control of the battery pack or data center. Specifically, prior to the battery pack or the data center having a heat demand, such as when the battery pack stops operating, the refrigerant system is first controlled to operate, and the main refrigerant path is controlled to be in communication with the second refrigerant branch to store the heat in the heat accumulator. For another example, when heating capacity of the refrigerant system exceeds the heat required by the battery pack or the data center, the excess heat is stored in the heat accumulator through the second refrigerant branch, to achieve an objective of energy storage. It should be understood that, when a temperature control target of the temperature control device is different, the first predetermined condition may be modified and adjusted based on an actual operating environment and operating characteristics of the temperature control target itself, and no specific limitation is made here. At block S102 and block S103, the outlet water temperature of the main heat transfer path is essentially a temperature of a coolant medium through which the temperature control device outputs the heat to the battery pack or the data center. When the outlet water temperature is less than the first set value, it is indicated that the outlet water temperature is relatively low, so it can be reasonably inferred that a temperature of an internal environment of the battery pack or the data center is low, and the battery pack or data center needs heat supply. Therefore, it can be reasonably inferred that an internal environment temperature of the battery pack or the data center is relatively low, and the battery pack or data center requires heat supply. When determining that the second predetermined condition is satisfied, it suggests that the heating capacity of the current temperature control device may not satisfy the heat demand of the battery pack or the data center. Therefore, at block S103, the main heat transfer path is controlled to be in communication with the second heat transfer branch, and the heat stored in the heat accumulator is transferred to the battery pack through the second heat transfer branch and the main heat transfer path to compensate for insufficient cooling supply of at an initial start-up stage of a compressor in the refrigerant system and meet the heat demand of the battery pack or the data center.

It should be understood that, when the second predetermined condition is satisfied, it is indicated that the heating capacity of the current temperature control device is insufficient to satisfy the heat demand of the battery pack or the data center. For example, during the operation of the temperature control device, when the second predetermined condition is satisfied, all the heat generated by the refrigerant system during the operation still cannot meet the heat demand of the battery pack or data center. Specifically, during a period when the compressor in the refrigerant system transitions from startup to stable output, a heat output of the refrigerant system cannot meet the heat demand of the battery pack or data center. Therefore, in some embodiments, the second predetermined condition may be set to be: a start-up period of the refrigerant system is less than a set time value. The set time value refers to a period for the compressor in the refrigerant system to go from the startup to the stable output. The set time value is set to different values based on an ambient temperature, a target control temperature of the battery pack or the data center, and power of the refrigerant system. The set time value may range from 5 seconds to 20 minutes, such as 10s, 20s, 30s, 50s, 1 minute, 5 minutes, etc. In some other embodiments, the second predetermined condition may be an ambient temperature value. For example, if the ambient temperature is excessively low, a heating load of the refrigerant system is excessively large, and the heat output of the refrigerant system in a low temperature environment cannot meet the heat demand of the battery pack or the data center.

It should be understood that, the second predetermined condition may be modified and adjusted based on the actual operating environment and the operating characteristics of the temperature control target itself, and no specific limitation is made here.

As illustrated in FIG. 2, according to some embodiments of the present disclosure, the control method comprises the following operations.

At block S201, an ambient temperature is obtained.

At block 202, the main refrigerant path is controlled to be in communication with the second refrigerant branch.

At block S203, an outlet water temperature of the main heat transfer path is obtained.

At block S204, based on the outlet water temperature being less than the first set value and the ambient temperature being less than or equal to a second set value, the main heat transfer path is controlled to be in communication with the second heat transfer branch.

In this embodiment, block S202 is the same as block S101, and block S203 is the same as block S102, which will not be repeated here. At block S201, obtaining ambient temperature information provides insight into a working environment of the refrigerant system, which comprises heat exchange efficiency between a condenser of the refrigerant system and outside air. Generally, when a cooling demand is constant, the lower the ambient temperature, the lower the heat exchange efficiency of the evaporator, and the higher the load and energy consumption of the refrigerant system. Therefore, at block S204, satisfying the second predetermined condition means that the ambient temperature is less than or equal to the second set value. When the second predetermined condition is satisfied, it means that the ambient temperature is low. Under such conditions, the transition time of the compressor from the startup to the stable output prevents it from supplying sufficient heat to the battery pack or the data center in time. Therefore, by controlling the main heat transfer path to be in communication with the second heat transfer branch, the heat stored in the heat accumulator can be transported to the battery pack through the second heat transfer branch and the main heat transfer path, to compensate for power limitation of the compressor itself in the refrigerant system, reduce the load on the refrigerant system, and avoid damage to the refrigerant system caused by overload operation of the refrigerant system while meeting the heat demand of the battery pack or the data center, which is conducive to long-term stable operation of the temperature control device.

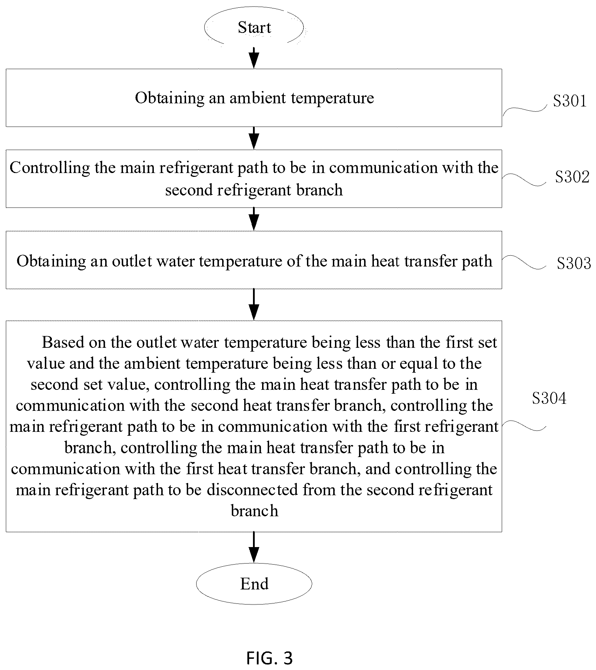

As illustrated in FIG. 3, according to some embodiments, the control method comprises the following operations.

At block S301, an ambient temperature is obtained.

At block S302, the main refrigerant path is controlled to be in communication with the second refrigerant branch.

At block S303, an outlet water temperature of the main heat transfer path is obtained.

At block S304, based on the outlet water temperature being less than the first set value and the ambient temperature being less than or equal to the second set value, the main heat transfer path is controlled to be in communication with the second heat transfer branch, the main refrigerant path is controlled to be in communication with the first refrigerant branch, the main heat transfer path is controlled to be in communication with the first heat transfer branch, and the second refrigerant branch is controlled to be cut off.

In this embodiment, block S301 to block S303 is the same as block S201 to block S203, which will not be repeated here. At block S304, when the ambient temperature is less than or equal to the second set value, it means that the ambient temperature is low. Under such conditions, the load on the compressor in the refrigerant system operates under a heavy load. When the ambient temperature is excessively low, the heating capacity of the compressor is insufficient to meet the heating demand of the battery pack or the data center. On the one hand, the main heat transfer path is controlled to be in communication with the second heat transfer branch to utilize the heat stored in the heat accumulator to heat part of the coolant in a main coolant path, thereby outputting part of the heat. On the other hand, the second refrigerant branch is controlled to be cut off to stop heat supply from the refrigerant system to the heat accumulator. Simultaneously, the main refrigerant path is controlled to be in communication with the first refrigerant branch, to concentrate all the heat generated by the refrigerant system into the first heat exchanger. With the main heat transfer path in communication with the first heat transfer branch, the remaining coolant in the main coolant path is heated via the first heat exchanger in the refrigerant system. This ensures that the heating demand of the battery pack or the data center can be met. In this embodiment, the heat stored in the heat accumulator is utilized to compensate for the power limitations of the compressor in the refrigerant system, thereby reducing the load on the refrigerant system, and avoiding high-frequency operation of the compressor in the refrigerant system while meeting the heat demand of the battery pack or data center, which is conducive to the long-term stable operation of the temperature control device.

It should be noted that, in this embodiment, the outlet water temperature of the main heat transfer path may be adjusted by adjusting flow rates of the coolant in the first heat transfer branch and the second heat transfer branch, ensuring that the outlet water temperature of the main heat transfer path is greater than or equal to the first set value. This allows the compressor in the refrigerant system to operate within rated power while meeting the heat demand of the battery pack or the data center.

Further, in this embodiment, the control method further comprises operations of obtaining information of electricity price. Specifically, the information of electricity price refers to peak-valley time-of-use electricity price. The peak-valley time-of-use electricity price refers to a pricing mechanism that divides 24 hours of a day into a plurality of time periods such as peak, flat, and valley periods based on load changes of power grid, and sets different electricity price levels for each time period to encourage electricity users to reasonably arrange electricity usage time, shift demand from peak period to valley period, and improve utilization efficiency of power resources. Therefore, based on comprehensive factors such as improving a utilization rate of the power resources and saving electricity costs, when the electricity price is in a valley period, the second set value is determined as a first temperature, and when the electricity price is in a peak period, the second set value is determined as a second temperature. The second temperature is greater than the first temperature.

It should be understood that, when the electricity price is in the valley period, the number of electricity users is small and an electricity cost is low. The ambient temperature used to determine whether the heat accumulator releases heat to the battery pack or data center may be appropriately lowered, for example, the second set value may be determined as the first temperature. When the electricity price is in the peak period, the electricity cost is high. The ambient temperature used to determine whether the heat accumulator releases cold may be appropriately increased, for example, the second set value may be determined as the second temperature. In this way, while meeting the heat demand of the battery pack or the data center, the electricity cost of the temperature control device is reduced, and the utilization efficiency of the power resources is improved.

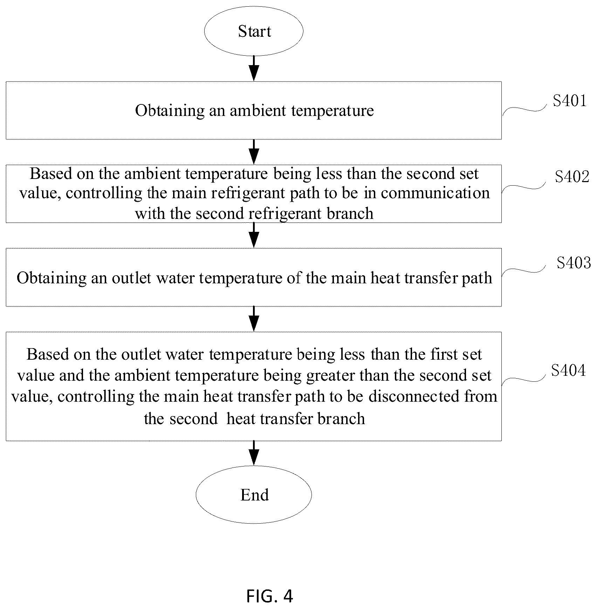

As illustrated in FIG. 4, according to some embodiments of the present disclosure, the control method further comprises the following operations.

At block S401, an ambient temperature is obtained.

At block S402, based on the ambient temperature being greater than the second set value, the main refrigerant path is controlled to be in communication with the second refrigerant branch.

At block S403, an outlet water temperature of the main heat transfer path is obtained.

At block S404, based on the outlet water temperature being less than the first set value and the ambient temperature being greater than the second set value, the main heat transfer path is controlled to be disconnected from the second heat transfer branch.

In this embodiment, block S403 to block S404 is the same as block S103 to block S104, which will not be repeated here. At block S402, satisfying the first predetermined condition means that the ambient temperature is greater than the second set value. Obtaining the ambient temperature information provides insight into the working environment of the refrigerant system, which comprises the heat exchange efficiency between the condenser of the refrigerant system and the outside air. Generally, when the heating demand is constant, the higher the ambient temperature, the higher the heat exchange efficiency of the evaporator, and the lower the load and the energy consumption of the refrigerant system. Therefore, at block S303, when the ambient temperature is greater than the second set value, it means that the ambient temperature is high. Based on the high ambient temperature, the refrigerant system is activated to connect the main refrigerant path to the second refrigerant branch, and to store more heat in the heat accumulator with lower energy consumption. In this way, overall energy consumption for the long-term temperature control of the battery pack or the data center.

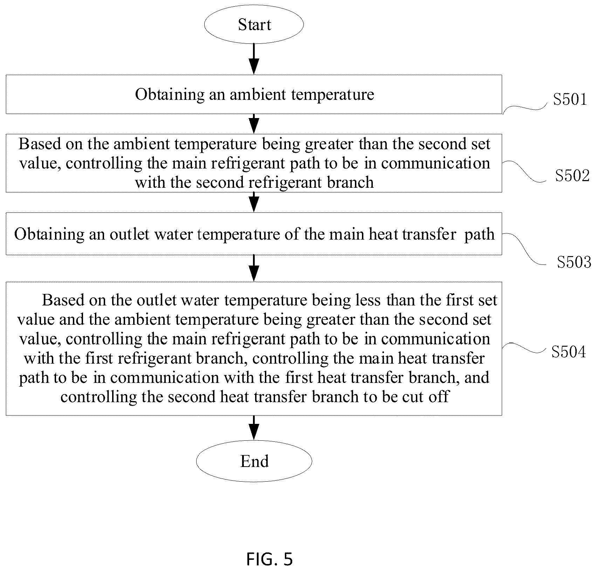

As illustrated in FIG. 5, according to some embodiments of the present disclosure, the control method comprises the following operations.

At block S501, an ambient temperature is obtained.

At block S502, based on the ambient temperature being greater than the second set value, the main refrigerant path is controlled to be in communication with the second refrigerant branch.

At block S503, an outlet water temperature of the main heat transfer path is obtained.

At block S504, based on the outlet water temperature being less than the first set value and the ambient temperature being greater than the second set value, the main refrigerant path is controlled to be in communication with the first refrigerant branch, the main heat transfer path is controlled to be in communication with the first heat transfer branch, and the main heat transfer path is controlled to be disconnected from second heat transfer branch.

In this embodiment, block S501 to block S503 is the same as block S401 to block S403, which will not be repeated here.

At block S504, when the ambient temperature is greater than the second set value, it means that the ambient temperature is high. At this time, the load on the compressor in the refrigerant system is small. When the ambient temperature is high, the heating capacity of the compressor may be excessive, causing the compressor to operate at a low frequency. In this embodiment, on the one hand, when the compressor of the refrigerant system is operating at a normal frequency, the main refrigerant path is in communication with the second refrigerant branch. This allows excess heat generated by the refrigerant system to be stored in the heat accumulator. Meanwhile, the second heat transfer branch is cut off to avoid or reduce heat loss or dissipation from the heat accumulator. On the other hand, the main refrigerant path is in communication with the first refrigerant branch to transport part of the heat to the first heat exchanger. With the main heat transfer path in communication with the first heat transfer branch, the heat output to the first heat exchanger is supplied to the battery pack or data center, to meet the heating demand of the battery pack or the data center.

In this embodiment, the excess heat generated by the refrigerant system is stored in the heat accumulator. When the battery pack or the data center has the heat demand, the heat stored in the heat accumulator is transported to the battery pack, which compensates for the insufficient cooling supply of the compressor in the refrigerant system at the initial start-up stage, meets the heat demand of the battery pack or the data center, and can also prevent the compressor from operating at the low frequency in a high temperature environment. In this way, problems such as liquid compression, unsatisfactory oil return, large compressor vibration causing vibration noise, and even pipeline breakage caused by low-frequency operation of the compressor are avoided.

It should be noted that, in this embodiment, by adjusting the flow rates of the refrigerant in the first refrigerant branch and the second refrigerant branch, heat release of the first heat exchanger and heat storage of the heat accumulator cooperate with each other. This ensures that the outlet water temperature of the main heat transfer path is greater than or equal to the first set value and the heat demand of the battery pack or the data center is met, while allowing the compressor in the refrigerant system to operate within the rated power to avoid the low-frequency operation of the compressor.

Further, in this embodiment, the operations of obtaining the information of electricity price are also comprised. Specifically, the information of electricity price refers to the peak-valley time-of-use electricity price. The peak-valley time-of-use electricity price refers to a pricing mechanism that divides 24 hours of a day into a plurality of time periods such as peak, flat, and valley periods based on the load changes of the power grid, and sets the different electricity price levels for each time period to encourage the electricity users to reasonably arrange the electricity usage time, shift demand from peak period to valley period, and improve the utilization efficiency of the power resources. Time periods for peak and valley electricity prices vary across different cities and seasons. Therefore, the peak period and the valley period of electricity price may be determined based on factors such as an actual location and season where the temperature control device is located. For example, in some cities, like Beijing, the peak periods for the electricity price are 10:00 to 15:00 and 18:00 to 21:00, while the valley period is 23:00 to 7:00. In summer, a highest peak period for the electricity price in Beijing is 11:00 to 13:00. Another example is Guangzhou, where the peak periods for the electricity price are 10:00 to 12:00 and 14:00 to 19:00, and the valley period for the electricity price is 00:00 to 8:00. Therefore, based on the comprehensive factors such as improving the utilization rate of the power resources and saving the electricity costs, when the electricity price is in the valley period, the second set value is determined as the first temperature, and when the electricity price is in the peak period, the second set value is determined as the second temperature. The second temperature is greater than the first temperature.

It should be understood that, when the electricity price is in the valley period, the number of electricity users is small and the electricity cost is low. The ambient temperature used to determine whether the heat accumulator stores heat may be appropriately lowered, for example, the second set value may be determined as the first temperature. When the electricity price is in the peak period, the electricity cost is high. The ambient temperature used to determine whether the heat accumulator stores heat may be appropriately increased, for example, the second set value may be determined as the second temperature. In this way, while meeting the heat demand of the battery pack or the data center, the electricity cost of the temperature control device is reduced, and the utilization efficiency of the power resources is improved.

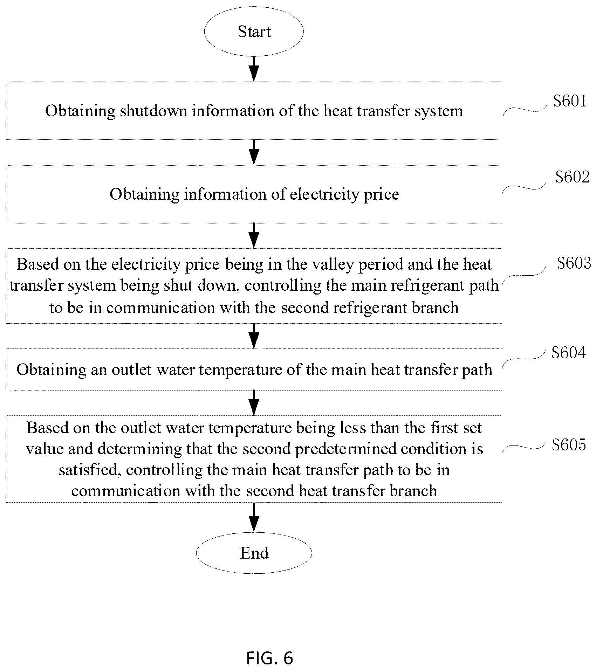

As illustrated in FIG. 6, according to some embodiments of the present disclosure, the control method comprises the following operations.

At block S601, shutdown information of the heat transfer system is obtained.

At block S602, information of electricity price is obtained.

At block S603, based on the electricity price being in the valley and the heat transfer system being shut down, the main refrigerant path is controlled to be in communication with the second refrigerant branch.

At block S604, an outlet water temperature of the main heat transfer path is obtained.

At block S605, based on the outlet water temperature being less than the first set value and determining that the second predetermined condition is satisfied, the main heat transfer path is controlled to be in communication with the second heat transfer branch. In this embodiment, block S604 is the same as block S102, and block S605 is the same as block S103, which will not be repeated here. At block S601, determining that the first predetermined condition is satisfied means that the heat transfer system is shut down and the electricity price is in the valley period. Specifically, the shutdown information may be an electrical signal instruction, transmitted by a host computer to the temperature control device, which instructs the heat transfer system to stop operating, or the shutdown information may also be a status signal based on shutdown of a circulation water pump in the heat transfer system. When the shutdown information is obtained, it means that there is no temperature control demand for the battery pack or the data center. At block S602 and block S603, based on the comprehensive factors such as improving the utilization rate of the power resources and saving the electricity costs, on the premise of obtaining the shutdown information, when the electricity price is in the valley period, the refrigerant system may be controlled to start independently, and the main refrigerant path is controlled to be in communication with the second refrigerant branch, to store heat in the heat accumulator. In this way, in low-temperature environments such as in winter or in high-latitude areas, when the battery pack has a heating demand during startup, the heat stored in the heat accumulator may be utilized and transported to the battery pack through the second heat transfer branch and the main heat transfer path, to compensate for the insufficient heating during the initial start-up stage of the compressor in the refrigerant system and meet the heat demand of the battery pack.

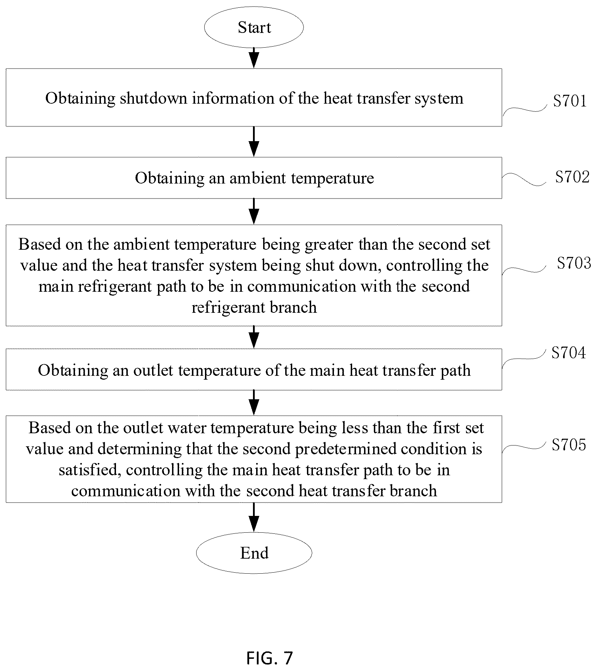

As illustrated in FIG. 7, according to some embodiments of the present disclosure, the control method comprises the following operations.

At block S701, shutdown information of the heat transfer system is obtained.

At block S702, an ambient temperature is obtained.

At block S703, based on the ambient temperature being greater than the second set value and the heat transfer system being shut down, the main refrigerant path is controlled to be in communication with the second refrigerant branch.

At block S704, an outlet water temperature of the main heat transfer path is obtained.

At block S705, based on the outlet water temperature being less than the first set value and determining that the second predetermined condition is satisfied, the main heat transfer path is controlled to be in communication with the second heat transfer branch.

In this embodiment, block S701 is the same as block S601, and block S704 is the same as block S102, and block S705 is the same as block S103, which will not be repeated here. At block S702, determining that the first predetermined condition is satisfied means that the heat transfer system is shut down and the ambient temperature is greater than the second set value. Obtaining the ambient temperature information insight into a working environment of the refrigerant system, which comprises the heat exchange efficiency between the condenser of the refrigerant system and the outside air. Generally, when the heating demand is constant, the higher the ambient temperature, the higher the heat exchange efficiency of the evaporator, and the lower the load and the energy consumption of the refrigerant system. Therefore, at block S703, when the ambient temperature is greater than the second set value, it means that the ambient temperature is high. As a result, based on the low ambient temperature, the refrigerant system is activated to connect the main refrigerant path to the second refrigerant branch, and to store a large amount of heat in the heat accumulator with lower energy consumption. In this way, the overall energy consumption for the long-term temperature control of the battery pack or the data center is reduced.

It should be noted that, in the control method provided in the present disclosure, the first set value ranges from 0°C to 60°C. In further embodiments, the first set value ranges from 5°C to 25°C, for example, the first set value may be 10°C, 15°C, 20°C, etc.

A temperature range for the second set value is -60°C to 60°C. In further embodiments, the temperature range for the second set value is -10°C to 20°C. The second set value may be appropriately adjusted based on an optimal operating temperature of different battery pack apparatus. For example, the second set value may be -5°C, -2°C, 0°C, 2°C, 5°C, 8°C, 10°C, etc.

An absolute value of a difference between the first temperature and the second temperature is greater than 0 and less than or equal to 10.

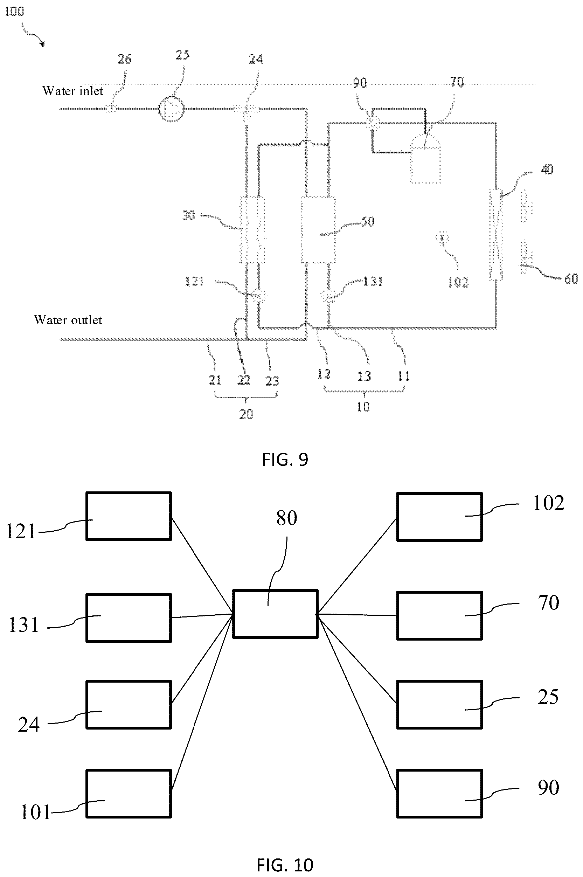

According to an embodiment of the present disclosure, a temperature control device 100 is further provided. As illustrated in FIG. 9 and FIG. 10, the temperature control device 100 comprises a refrigerant system, a heat transfer system, a heat accumulator 50, a first temperature sensor 101, a second temperature sensor 102, and a control device 80. Specifically, the refrigerant system comprises: a refrigerant circulation pipeline 10; a compressor 70, a first heat exchanger 30 and a second heat exchanger 40 that are disposed at the refrigerant circulation pipeline 10; and a fan unit 60 disposed at a side of the second heat exchanger 40. The refrigerant circulation pipeline 10 comprises a main refrigerant path 11, a first refrigerant branch 12, and a second refrigerant branch 13. The first refrigerant branch 12 and the second refrigerant branch 13 are connected in parallel to the main refrigerant path 11. A refrigerant in the main refrigerant path 11 can respectively pass through the first refrigerant branch 12 and the second refrigerant branch 13 to complete circulation flow. The heat transfer system comprises a heat transfer circulation pipeline 20, a circulation water pump 25, and a filter 26. The heat transfer circulation pipeline 20 comprises a main heat transfer path 21, a first heat transfer branch 22, and a second heat transfer branch 23. The first heat transfer branch 22 and the second heat transfer branch 23 are connected in parallel to the main heat transfer path 21. A coolant in the main heat transfer path 21 can respectively pass through the first heat transfer branch 22 and the second heat transfer branch 23 to complete circulation flow. The circulation water pump 25, the filter 26, and an electric heater are all disposed at the main heat transfer path 21.

The first temperature sensor 101 is disposed at the main heat transfer path 21 close to a water outlet of the main heat transfer path 21. The first temperature sensor 101 is configured to obtain an outlet water temperature of the main heat transfer path 21.

Specifically, the first heat exchanger 30 is in communication with the first heat transfer branch 22 and the first refrigerant branch 12, respectively. The heat accumulator 50 is in communication with the second heat transfer branch 23 and the second refrigerant branch 13, respectively. The heat accumulator 50 is filled with heat storage material for storing heat. When the refrigerant system supplies heat to the battery pack, the first heat exchanger 30 functions as a condenser for outputting the heat, and the second heat exchanger 40 functions as an evaporator. During operation of the temperature control device 100, the refrigerant system starts the compressor 70 to transport the refrigerant to the second heat exchanger 40 to absorb heat, and subsequently transports the heat to the first heat exchanger 30 and the heat accumulator 50 respectively through the main refrigerant path 11 and the first refrigerant branch 12 and the second refrigerant branch 13. The gaseous refrigerant undergoes a phase change, condenses, and releases heat in the first heat exchanger 30 or the heat accumulator 50, to supply heat to the heat transfer system through the first heat exchanger 30 or the heat accumulator 50. The heat transfer system transports heat to the battery pack or the data center through the first heat transfer branch 22 and the main heat transfer path 21 or through the second heat transfer branch 23 and the main heat transfer path 21, realizing temperature control for the battery pack or the data center, etc.

In this embodiment, the second temperature sensor 102 is configured to obtain an ambient temperature. The control device 80 is electrically connected to the refrigerant system, the heat transfer system, the first temperature sensor 101, and the second temperature sensor 102. The control device 80 is configured to control on-off status of the second refrigerant branch 13 and the second heat transfer branch 23 based on the outlet water temperature and the ambient temperature, to realize automatic control of the temperature control device 100.

In this embodiment, the temperature control device 100 further comprises a first valve assembly and a second valve assembly. The first valve assembly comprises a first electronic expansion valve 121 and a second electronic expansion valve 131. The first electronic expansion valve 121 is disposed at the first refrigerant branch 12 and is located at a side of the first heat exchanger 30 away from the compressor. The second electronic expansion valve 131 is disposed at the second refrigerant branch 13 and is located at a side of the heat accumulator 50 away from the compressor. The second valve assembly comprises a three-way valve 24. The three-way valve 24 is disposed at the heat transfer circulation pipeline 20, and is located at an upstream side of the first heat exchanger 30 and the heat accumulator 50. Three connection ports of the three-way valve 24 are connected to the main heat transfer path 21, the first heat transfer branch 22 and the second heat transfer branch 23, respectively. The control device 80 is electrically connected to the first electronic expansion valve 121, the second electronic expansion valve 131, and the three-way valve 24. Therefore, the control device 80 is configured to control on-off status and flow rates of the first refrigerant branch 12, the second refrigerant branch 13, the first heat transfer branch 22, and the second heat transfer branch 23 by controlling opening degrees of the first electronic expansion valve 121, the second electronic expansion valve 131, and the three-way valve 24.

In other embodiments, the second valve assembly comprises a first two-way valve (not illustrated in figures) and a second two-way valve (not illustrated in the figures). The first two-way valve is disposed at the first heat transfer branch 22 and is located at the upstream side of the first heat exchanger 30. The second two-way valve is disposed at the second heat transfer branch 23 and is located at the upstream side of the heat accumulator 50. The control device 80 is electrically connected to the first two-way valve and the second two-way valve. Therefore, the control device 80 is configured to control the on-ff status and the flow rates of the first heat transfer branch 22 and the second heat transfer branch 23 by controlling opening degrees of the first two-way valve and the second two-way valve, respectively.

In this embodiment, the control device 80 is further configured to obtain information of electricity price and shutdown information. The control device 80 is configured to comprehensively integrate the information of electricity price, the shutdown information, the outlet water temperature, and the ambient temperature to control the opening degrees of the first electronic expansion valve 121, the second electronic expansion valve 131, and the three-way valve 24, to control the on-off status and the flow rates of the first refrigerant branch 12, the second refrigerant branch 13, the first heat transfer branch 22, and the second heat transfer branch 23.

In some embodiments, the refrigerant system further comprises a four-way reversing valve 90 disposed at the main refrigerant path. A gas inlet and a gas outlet of the compressor 70 are both in communication with the main refrigerant path 11 through the four-way reversing valve 90. In this embodiment, the control device 80 is electrically connected to both the four-way reversing valve 90 and the compressor 70. When a temperature of the battery pack needs to be increased, the control device is configured to control the four-way reversing valve 90 to be in a first state, to enable the compressor 70 to be in communication with the main refrigerant path 11. At this time, a flow direction of a refrigerant in the refrigerant system follows two paths. one path is: the gas outlet of the compressor 70, the main refrigerant path 11, the first refrigerant branch 12, the first heat exchanger 30, the first electronic expansion valve 121, the first refrigerant branch 12, the main refrigerant path 11, the second heat exchanger 40, the main refrigerant path 11, a gas suction port of the compressor 70; and another path is: the gas outlet of the compressor 70, the main refrigerant path 11, the second refrigerant branch 13, the heat accumulator 50, the second electronic expansion valve 131, the second refrigerant branch 13, the main refrigerant path 11, the second heat exchanger 40, the main refrigerant path 11, the gas suction port of the compressor 70. When the four-way reversing valve 90 is in a second state, the first heat exchanger 30 functions as a condenser and the second heat exchanger 40 functions as an evaporator, to enable the refrigerant system to output heat to the battery pack.

When the temperature of the battery pack needs to be reduced, the control device is configured to control the four-way reversing valve 90 to be in the second state, to enable the compressor 70 to be in communication with the main refrigerant path 11. When the four-way reversing valve 90 is in the second state, a flow direction of the refrigerant in the refrigerant circulation pipeline is changed. At this time, the first heat exchanger 30 functions as an evaporator and the second heat exchanger 40 functions as a condenser, to enable the refrigerant system to output cold to the battery pack.

The temperature control device 100 provided in the present disclosure has a plurality of operating modes based on the outlet water temperature, the ambient temperature, an operating status of the circulation water pump 25, and the information of electricity price. The temperature control device 100 comprises at least the following three operating modes.

First, heat storage mode:

When the circulation water pump 25 is operating, the outlet water temperature is less than the first determined temperature, and the ambient temperature is greater than the first temperature when the electricity price is in the valley period or the ambient temperature is greater than the second temperature when the electricity price is in the peak period, the heat storage mode of the temperature control device 100 is activated.

In a cold storage mode, the control device 80 is configured to control the connection port between the three-way valve 24 and the first heat transfer branch 22 to be fully opened, which enables the main heat transfer path 21 to be fully in communication with the first heat transfer branch 22. The connection port between the three-way valve 24 and the second heat transfer branch 23 is controlled to be closed, which enables the second heat transfer branch 23 to be cut off, resulting in zero coolant flow from the second heat transfer branch 23 to the heat accumulator 50. The control device 80 is configured to control the compressor 70 to start, control both the first electronic expansion valve 121 and the second electronic expansion valve 131 to be opened, and control the fan unit 60 to start.

In the heat storage mode, the coolant flows sequentially through: a water inlet of the main heat transfer path 21, the main heat transfer path 21, the circulation water pump 25, the three-way valve 24, the first heat transfer branch 22, the first heat exchanger 30, the first heat transfer branch 22, the main heat transfer path 21, the electric heater, and the water outlet of the main heat transfer path 21. Refrigerant flow circulation in the refrigerant system follows two paths, one path is: the gas outlet of the compressor 70, the main refrigerant path 11, the first refrigerant branch 12, the first heat exchanger 30, the first electronic expansion valve 121, the first refrigerant branch 12, the main refrigerant path 11, the second heat exchanger 40, the main refrigerant path 11, and the gas suction port of the compressor 70; and another path is: the gas outlet of the compressor 70, the main refrigerant path 11, the second refrigerant branch 13, the heat accumulator 50, the second electronic expansion valve 131, the second refrigerant branch 13, the main refrigerant path 11, the second heat exchanger 40, the main refrigerant path 11, and the gas suction port of the compressor 70.

In the cold storage mode, the control device 80 is configured to adjust the opening degrees of the first electronic expansion valve 121 and the second electronic expansion valve 131 to adjust the flow rates of the refrigerant in the first refrigerant branch 12 and the second refrigerant branch 13. This allows part of the heat to be stored in the heat accumulator 50. While ensuring that the outlet water temperature of the main heat transfer path 21 is less than or equal to the first set value and the heat demand of the battery pack or the data center is met, the compressor 70 in the refrigerant system operates within the rated power to avoid the low-frequency operation of the compressor 70.

Second, heat release mode:

When the circulation water pump 25 is operating, the outlet water temperature is less than the first determined temperature, and the ambient temperature is less than the first temperature when the electricity price is in the valley period or the ambient temperature is less than the second temperature when the electricity price is in the peak period, the heat release mode of the temperature control device 100 is activated.

In the heat release mode, the control apparatus 80 is configured to control the connection port between the three-way valve 24 and the first heat transfer branch 22 to be partially opened, and control the connection port between the three-way valve 24 and the second heat transfer branch 23 to be partially opened. In this way, the main heat transfer path 21 is in communication with both the first heat transfer branch 22 and the second heat transfer branch 23. By adjusting a two-way opening degree ratio of the three-way valve 24, requirements that the outlet water temperature approaches or reaches the first set value can be satisfied. The control device 80 is configured to control the compressor 70 to start, the first electronic expansion valve 121 to open, the second electronic expansion valve 131 to close, and the fan unit 60 to start.

In the heat release mode, coolant circulation follows two paths, one path is: the water inlet of the main heat transfer path 21, the main heat transfer path 21, the circulation water pump 25, the three-way valve 24, the first heat transfer branch 22, the first heat exchanger 30, the first heat transfer branch 22, the main heat transfer path 21, the electric heater, and the water outlet of the main heat transfer path 21; and another path is: the water inlet of the main heat transfer path 21, the main heat transfer path 21, the circulation water pump 25, the three-way valve 24, the second heat transfer branch 23, the heat accumulator 50, the second heat transfer branch 23, the main heat transfer path 21, the electric heater, and the water outlet of the main heat transfer path 21. The refrigerant flow circulation in the refrigerant system follows a single path: the gas outlet of the compressor 70, the main refrigerant path 11, the first refrigerant branch 12, the first heat exchanger 30, the first electronic expansion valve 121, the first refrigerant branch 12, the main refrigerant path 11, the second heat exchanger 40, the main refrigerant path 11, and the gas suction port of the compressor 70.

In the heat release mode, the control device 80 is configured to adjust and monitor the opening degree of the first electronic expansion valve 121 and the two-way flow ratio of the three-way valve 24, to coordinate and adjust the heat release of the heat accumulator 50. By utilizing the heat stored in the heat accumulator 50 to compensate for the power limitation of the compressor 70 in the refrigerant system, reduce the load on the refrigerant system, and avoid the high-frequency operation of the compressor 70 in the refrigerant system while meeting the heat demand of the battery pack or data center, which is conducive to the long-term stable operation of the temperature control device 100.

Third, standby heat storage mode:

When the circulation water pump 25 stops, the control device 80 obtains shutdown information of the circulation water pump 25. Alternatively, the shutdown information is transmitted by the host computer to the temperature control device 100. The shutdown information specifically indicates that cooling supply to the battery pack or data center is stopped, causing the circulation water pump 25 to stop operating. When the control device 80 obtains the shutdown information, it indicates that the battery pack or data center has no heating demand, and the heat transfer system stops operating at this time. Further, when the electricity price is in the valley period or the ambient temperature is greater than the second temperature, the standby heat storage mode is activated.

In the standby heat storage mode, the control device 80 is configured to control the compressor 70 to start, the second electronic expansion valve 131 to open, the first electronic expansion valve 121 to close, and the fan unit 60 to start. The circulation water pump 25 stops operating, the three-way valve 24 does not operate or performs a standby opening degree.

In the standby heat storage mode, the coolant in the heat transfer circulation pipeline 20 does not circulate. Refrigerant circulation in the refrigerant circulation pipeline 10 of the refrigerant system follows a single path, and the refrigerant flows sequentially through: the gas outlet of the compressor 70, the main refrigerant path 11, the second refrigerant branch 13, the heat accumulator 50, the second electronic expansion valve 131, the second refrigerant branch 13, the main refrigerant path 11, the second heat exchanger 40, the main refrigerant path 11, and the gas suction port of the compressor 70.

In this mode, when the heat transfer system in the temperature control device 100 is on standby, heat can be stored in the heat accumulator 50 during the valley period of the electricity price or high-temperature periods or high-temperature environments. This stored heat is then available for cooling output in the cooling mode when needed, or for providing supplemental heating when the compressor 70 is started.

The temperature control device provided in the present disclosure has the following advantages:

1. The present disclosure incorporates a four-way valve to the compressor-based refrigeration system, and the reversal of the four-way valve allows the system to function as a heat pump unit, replacing electric heating solutions and effectively improving the system's overall energy efficiency.

2. By integrating a heat storage circulation, the present disclosure can fully utilize electricity resources during the "valley period" for heat storage, saving operating costs while ensuring stable heating output.

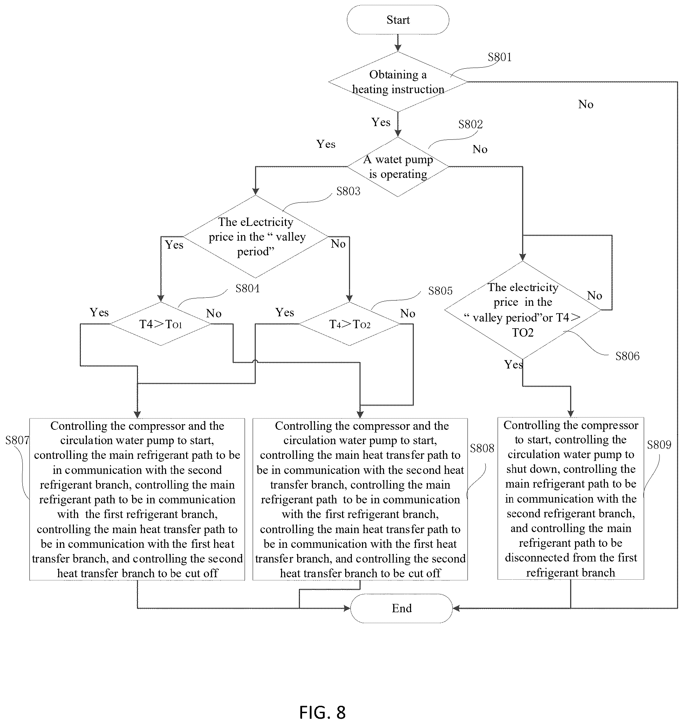

According to an embodiment of the present disclosure, a control method for a temperature control device is provided. As illustrated in FIG. 8, the control method specifically comprises the following operations.

At block S801, a heating instruction is obtained.

At block S802, operation information of the circulation water pump is obtained and determination is made on whether the circulation water pump is started; if yes, block S803 is executed; otherwise, block S806 is executed.

At block S803, determination is made on whether the electricity price is in the valley period, if yes, block S804 is executed; otherwise, block S805 is executed.

At block S804, determination is made on whether an ambient temperature T4 is greater than a first temperature TO1, if yes, block S807 is executed; otherwise, block S808 is executed.

At block S805, determination is made on whether the ambient temperature T4 is greater than a second temperature TO2, if yes, block S807 is executed; otherwise, block S808 is executed.

At block S806, determination is made on whether the electricity price is in the valley period or determination is made on whether the ambient temperature T4 is greater than the second temperature TO2, if yes, block S809 is executed; otherwise, a previous block shall be returned to.

At block S807, the compressor and circulation water pump are controlled to start, the main refrigerant path is control to be in communication with the second refrigerant branch, the main refrigerant path is control to be in communication with the first refrigerant branch, the main heat transfer path is controlled to be in communication with the first heat transfer branch, and the second heat transfer branch is controlled to be cut off.

At block S808, the compressor and circulation water pump are controlled to start, the main heat transfer path is control to be in communication with the second heat transfer branch, the main refrigerant path is control to be in communication with the first refrigerant branch, the main heat transfer path is controlled to be in communication with the first heat transfer branch, and the second heat transfer branch is controlled to be cut off.

At block S809, the compressor is controlled to start, the circulation water pump is controlled to shut down, the main refrigerant path is controlled to be in communication with the second refrigerant branch, and main refrigerant path is controlled to be disconnected from the first refrigerant branch.

In this embodiment, obtaining a heating instruction may specifically involve: when the outlet water temperature in the main heat transfer path is less than the first set value, the control device generates a heating instruction based on the outlet water temperature being less than the first set value, and controls the compressor to start, so that gaseous refrigerant discharged from the gas outlet of the compressor is transported through the four-way reversing valve to the first heat exchanger for condensation and heat release, outputting the heat to the battery pack. In other embodiments, the heating instruction may be a heating instruction issued by a host computer to the control device. The control device controls the operation of the refrigerant system based on the heating instruction from the host computer to transport the heat to the battery pack.

According to an embodiment of the present disclosure, a computer-readable storage medium is further provided. The computer-readable storage medium has a computer-readable instruction stored thereon. The computer-readable instruction, when read by one or more processors, causes the one or more processors to execute the control method for the temperature control device according to any one of the embodiments of the present disclosure. The processor involved in the present disclosure, for example, may be a processor in a temperature control device. The temperature control device comprises but not limited to at least one of a vehicle-mounted liquid-cooled air conditioner and an air-cooled chilled water air conditioner. The control method may comprise but is not limited to at least one of the following operations: controlling the main refrigerant path to be in communication with the second refrigerant branch; obtaining the outlet water temperature of the main heat transfer path; and controlling the main heat transfer path to be in communication with the second heat transfer branch based on the outlet water temperature being less than the first set value.

It should be noted that, the logic and/or step described in other manners herein or shown in the flow chart, for example, a particular sequence table of executable instructions for realizing the logical function, may be specifically achieved in any computer-readable medium to be used by the instruction execution system, device or apparatus (such as the system based on computers, the system comprising processors or other systems capable of obtaining the instruction from the instruction execution system, device and apparatus and executing the instruction), or to be used in combination with the instruction execution system, device and apparatus. As to the specification, "the computer-readable medium" may be any device adaptive for comprising, storing, communicating, propagating or transferring programs to be used by or in combination with the instruction execution system, device or apparatus. More specific examples of the computer-readable medium comprise but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer-readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

While the specific embodiments of the present disclosure have been described above, the protection scope of the present disclosure is not limited to these embodiments. Various variants and alternatives can be easily conceived by any of those skilled in the art without departing from the technical scope of the present disclosure. Therefore, these variants and alternatives are to be encompassed by the protection scope of present disclosure as defined by the claims as attached.

## Claims

1. A control method for a temperature control device, wherein:
the temperature control device comprises a refrigerant system, a heat transfer system, and a heat accumulator, wherein:
the refrigerant system comprises a main refrigerant path, a first heat exchanger, and a first refrigerant branch and a second refrigerant branch connected in parallel to the main refrigerant path; and
the heat transfer system comprises a main heat transfer path, and a first heat transfer branch and a second heat transfer branch connected in parallel to the main heat transfer path, wherein the first heat transfer branch is thermally connected to the first refrigerant branch through the first heat exchanger, and the second heat transfer branch is thermally connected to the second refrigerant branch through the heat accumulator; and
the control method comprises:
determining that a first predetermined condition is satisfied, controlling the main refrigerant path to be in communication with the second refrigerant branch, to enable the heat accumulator to store energy;
obtaining an outlet water temperature of the main heat transfer path; and
based on the outlet water temperature being less than a first set value and determining that a second predetermined condition is satisfied, controlling the main heat transfer path to be in communication with the second heat transfer branch, to enable the heat accumulator to release heat.

2. The control method for the temperature control device according to claim 1, wherein said determining that the second predetermined condition is satisfied comprises at least one of the following:
obtaining an ambient temperature and determining that the ambient temperature is less than or equal to a second set value; and
obtaining a start time of the refrigerant system and determining that the start time is less than a set time value.

3. The control method for the temperature control device according to claim 2, wherein the control method further comprises:
based on the ambient temperature being less than or equal to the second set value and the outlet water temperature being less than the first set value, controlling the main refrigerant path to be in communication with the first refrigerant branch, controlling the main heat transfer path to be in communication with the first heat transfer branch, and controlling the main refrigerant path to be disconnected from the second refrigerant branch.

4. The control method for the temperature control device according to claim 2, wherein said determining that the first predetermined condition is satisfied comprises:
obtaining the ambient temperature and determining that the ambient temperature is greater than the second set value.

5. The control method for the temperature control device according to claim 4, wherein the control method further comprises:
based on the outlet water temperature being less than the first set value and the ambient temperature being greater than the second set value, controlling the main refrigerant path to be in communication with the first refrigerant branch, controlling the main heat transfer path to be in communication with the first heat transfer branch, and controlling the main heat transfer path to be disconnected from the second heat transfer branch.

6. The control method for the temperature control device according to claim 2 or 4, wherein the control method further comprises:
obtaining information of electricity price;
setting the second set value to a first temperature based on the electricity price being in a valley period; and
setting the second set value to a second temperature based on the electricity price being in a peak period;
wherein the second temperature is greater than the first temperature.

7. The control method for the temperature control device according to claim 1, wherein said determining that the first predetermined condition is satisfied comprises at least one of the following:
obtaining information of electricity price, and determining that the electricity price is in a valley period and the heat transfer system is shut down; and
obtaining an ambient temperature, and determining that the ambient temperature is greater than a second set value and the heat transfer system is shut down.

8. A temperature control device, comprising:
a refrigerant system comprising a refrigerant circulation pipeline and a first heat exchanger, wherein the refrigerant circulation pipeline comprises a main refrigerant path, and a first refrigerant branch and a second refrigerant branch connected in parallel to the main refrigerant path;
a heat transfer system comprising a heat transfer circulation pipeline, wherein the heat transfer circulation pipeline comprises a main heat transfer path, and a first heat transfer branch and a second heat transfer branch connected in parallel to the main heat transfer path;
a heat accumulator;
a first temperature sensor disposed at an outlet end of the main heat transfer path and configured to detect an outlet water temperature of the main heat transfer path; and
a control device electrically connected to the refrigerant system, the heat transfer system, and the first temperature sensor;
wherein the first heat transfer branch is thermally connected to the first refrigerant branch through the first heat exchanger, and the second heat transfer branch is thermally connected to the second refrigerant branch through the heat accumulator; and wherein the control device is configured to control on-off of the second refrigerant branch and the second heat transfer branch based on the outlet water temperature, a first predetermined condition, and a second predetermined condition.

9. The temperature control device according to claim 8, further comprising:
a second temperature sensor electrically connected to the control device and configured to detect an ambient temperature;
wherein the control device is further configured to obtain information of electricity price, and control on-off of the first refrigerant branch, the second refrigerant branch, the first heat transfer branch, and the second heat transfer branch based on the information of electricity price, the outlet water temperature, and the ambient temperature.

10. The temperature control device according to claim 9, further comprising:
a first valve assembly disposed at the refrigerant circulation pipeline and configured to control refrigerant flow rates of the first refrigerant branch and the second refrigerant branch; and
a second valve assembly disposed at the heat transfer circulation pipeline and configured to control refrigerant flow rates of the first heat transfer branch and the second heat transfer branch;
wherein the control device is electrically connected to the first temperature sensor, the second temperature sensor, the first valve assembly, and the second valve assembly.

11. The temperature control device according to claim 9, wherein the refrigerant system further comprises:
a four-way reversing valve; and
a compressor in communication with the main refrigerant path through the four-way reversing valve;
wherein the control device is electrically connected to the four-way reversing valve and the compressor, and is configured to control operation of the four-way reversing valve and the compressor based on the outlet water temperature, the first predetermined condition, and the second predetermined condition.

12. A computer-readable storage medium having a computer-readable instruction stored thereon, wherein the computer-readable instruction, when read by one or more processors, causes the one or more processors to execute a control method according to any one of claims 1 to 8.
